# EUROPÄISCHE PATENTANMELDUNG

(11) **EP 4 837 406 A2**
(43) Veröffentlichungstag der Anmeldung: **11.11.2026**
(21) Anmeldenummer: 26176521.8
(22) Anmeldetag: 05.05.2026
(51) Int. Cl.: A01D 34/00, G05D 1/248

(54) **MOBILES ARBEITSGERÄT ZUR BEARBEITUNG EINES BODENS, VERFAHREN ZUM BETRIEB EINES MOBILEN ARBEITSGERÄTS UND SYSTEM MIT EINEM MOBILEN ARBEITSGERÄT**

(30) Priorität: 08.05.2025 DE 102025117681
(71) Anmelder: Andreas Stihl AG & Co. KG, 71336 Waiblingen (DE)
(72) Erfinder: MACK, Bernd, 73630 Remshalden (DE)
(74) Vertreter: v. Bezold & Partner Patentanwälte - PartG mbB

(57) **Zusammenfassung**

Die Erfindung betrifft ein mobiles Arbeitsgerät (1) zur teilautonomen und/oder autonomen Bearbeitung eines Bodens (B) eines Arbeitsbereichs (A) entlang eines Bearbeitungspfads (BP), wobei der Arbeitsbereich (A) durch einen Rand (R) drahtlos definiert ist, umfassend: eine Antriebseinrichtung (100) zur Erzeugung einer Antriebskraft (F_A) zum Antrieb des Arbeitsgeräts (1); eine Fahrwerkeinrichtung (200) mit zumindest einem Antriebselement (210) zur Übertragung der Antriebskraft (F_A) auf den Boden (B), um das Arbeitsgerät (1) in einer Bewegungsrichtung (BR) zu bewegen; eine Kontrolleinrichtung (300) zur Einstellung, insbesondere Steuerung und/oder Regelung, der Antriebseinrichtung (100) und/oder der Fahrwerkeinrichtung (200) in Abhängigkeit einer Bearbeitungsstrategieinformation; eine Kommunikationseinrichtung (600) zur Ausbildung einer Kommunikationsverbindung (NS1, NS2, NS3, NS4) mit einem Funknavigationssystem (2) zur Bestimmung einer Position (P1, P2) des Arbeitsgeräts (1); wobei die Kontrolleinrichtung (300) zur Ermittlung eines Beeinträchtigungszustands der Kommunikationsverbindung (NS1, NS2, NS3, NS4) konfiguriert ist, und wobei die Kontrolleinrichtung (300) konfiguriert ist, die Antriebseinrichtung (100) und/oder die Fahrwerkeinrichtung (200) in Abhängigkeit einer geänderten Bearbeitungsstrategieinformation einzustellen, welche unter Berücksichtigung des ermittelten Beeinträchtigungszustands einen definierten Bearbeitungspfad (BP) festlegt, um zumindest ein Überfahren des Arbeitsgeräts (1) über den Rand (R) zu vermeiden. Die Erfindung betrifft ferner ein Verfahren zum Betrieb eines mobilen Arbeitsgeräts (1) sowie ein System mit einem mobilen Arbeitsgerät (1).

## Beschreibung

Die vorliegende Erfindung liegt auf dem Gebiet der mobilen Bodenbearbeitungsgeräte und betrifft ein mobiles Arbeitsgerät zur teilautonomen und/oder autonomen Bearbeitung eines Bodens eines Arbeitsbereichs entlang eines Bearbeitungspfads. Ferner betrifft die vorliegende Erfindung ein Verfahren zum Betrieb eines mobilen Arbeitsgeräts zur teilautonomen und/oder autonomen Bearbeitung eines Bodens eines Arbeitsbereichs entlang eines Bearbeitungspfads, sowie ein System mit einem derartigen mobilen Arbeitsgerät.

Mobile Arbeitsgeräte zur Bodenbearbeitung sind in Abhängigkeit ihres Anwendungsgebiets und Einsatzzwecks unterschiedlich konfiguriert und müssen eine Vielzahl von unterschiedlichen Anforderungen erfüllen. Besondere Anforderungen werden vor allem an teilautonom und autonom fahrende Arbeitsgeräte gestellt, welche sich funknavigationsbasiert bewegen.

Im Bereich der autonom und funknavigationsbasiert agierenden Mähroboter zur Bearbeitung von Rasenflächen (Roboter-Rasenmäher) besteht beispielsweise eine zentrale Herausforderung darin, während Betriebszustands des Mähroboters stets eine genaue Bestimmung der Position gewährleisten zu können.

Funknavigationsbasierte Mähroboter nutzen zur präzisen Positionsbestimmung auf Rasenflächen mittlerweile ein globales Navigationssatellitensystem (GNSS), wobei das so genannte Global Positioning System (GPS) ein bekanntes Subsystem darstellt. Um die Bestimmungsgenauigkeit der Position zu verbessern, nutzen Mähroboter zunehmend Multi-GNSS-Empfänger mittels welchen Navigationssignale weiterer globaler satellitengestützter Funknavigationssysteme (zum Beispiel GLONASS, Galileo und BeiDou) verarbeitet werden können. Allerdings kann in so genannten Abschattungsbereichen, innerhalb welcher die Funksignalkommunikation zwischen Satellit und Empfangseinrichtung im Mähroboter unterbrochen oder zumindest gestört ist, die Bestimmung der Position fehlerhaft sein. Abschattungsbereiche können durch Hindernisse wie beispielsweise Gebäude, dichte Baumkronen, Überdachungen oder Mauern verursacht sein.

Eine besondere Herausforderung stellen zeitlich vorübergehende Abschattungsbereiche dar, welche beispielsweise durch mobile oder temporäre Objekte (zum Beispiel Nutzfahrzeuge, Sonnenschirme, Sonnensegel, Trampoline, Wäsche, etc.) und Wettereinflüsse verursacht sind. Trotz eines Einlernvorgangs des Mähroboters (beispielsweise mittels einer App als virtuellem Joystick) mit dem Abfahren von Rändern zur Definition eines Arbeitsbereichs kann es bei vorübergehend auftretenden Abschattungsbereichen zu Problemen hinsichtlich einer genauen Positionsbestimmung kommen.

Es ist eine Aufgabe der vorliegenden Erfindung, ein mobiles funknavigationsbasiertes Arbeitsgerät zur Bearbeitung eines Bodens eines Arbeitsbereichs bereitzustellen, welches in einem Betriebszustand insbesondere bei temporär auftretenden Abschattungsbereichen durch ein verbessertes Verhalten gekennzeichnet ist. Ferner ist es eine Aufgabe der vorliegenden Erfindung, ein Verfahren zum Betrieb eines derartigen Arbeitsgeräts und ein System mit einem derartigen Arbeitsgerät bereitzustellen.

Die Aufgabe wird durch die Merkmale der Ansprüche 1, 10 und 11 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt ein mobiles Arbeitsgerät zur teilautonomen und/oder autonomen Bearbeitung eines Bodens eines Arbeitsbereichs entlang eines Bearbeitungspfads, wobei insbesondere der Arbeitsbereich durch einen Rand drahtlos definiert ist, umfassend: • eine Antriebseinrichtung zur Erzeugung einer Antriebskraft zum Antrieb des Arbeitsgeräts; • eine Fahrwerkeinrichtung mit zumindest einem Antriebselement zur Übertragung der Antriebskraft auf den Boden, um das Arbeitsgerät in einer Bewegungsrichtung zu bewegen, insbesondere im Wesentlichen entlang des Bearbeitungspfads; • eine Kontrolleinrichtung zur Einstellung, insbesondere Steuerung und/oder Regelung, der Antriebseinrichtung und/oder der Fahrwerkeinrichtung in Abhängigkeit einer Bearbeitungsstrategieinformation; • eine Kommunikationseinrichtung zur Ausbildung einer Kommunikationsverbindung, insbesondere zum Empfang von Navigationssignalen, mit einem Funknavigationssystem zur Bestimmung einer Position des Arbeitsgeräts; wobei die Kontrolleinrichtung zur Ermittlung eines Beeinträchtigungszustands der Kommunikationsverbindung konfiguriert ist, und wobei die Kontrolleinrichtung konfiguriert ist, die Antriebseinrichtung und/oder die Fahrwerkeinrichtung in Abhängigkeit einer geänderten Bearbeitungsstrategieinformation einzustellen, welche unter Berücksichtigung des ermittelten Beeinträchtigungszustands einen definierten Bearbeitungspfad festlegt, um zumindest ein Überfahren des Arbeitsgeräts über den Rand zu vermeiden. Dabei kann die drahtlose Definition des Rands und/oder des Arbeitsbereichs beispielsweise durch Kartographierung über bekannte GNSS- und/oder GPS-Positionen erfolgen und/oder realisiert sein. Der Rand kann auch durch eine von dem Arbeitsbereich umschlossene (umgebende) ausgesparte Fläche definiert sein, zum Beispiel eine Verkehrsfläche, ein Teich, ein Pool oder dergleichen.

Mit der vorliegenden Erfindung kann ein mobiles Bodenbearbeitungsgerät bereitgestellt werden, welches konfiguriert ist, nicht nur Navigationssignale der Kommunikationsverbindung mit dem Funknavigationssystem auszuwerten, sondern den Zustand der Kommunikationsverbindung und somit der Navigationssignale an sich zu überwachen, und einen Beeinträchtigungszustand der Kommunikationsverbindung zu ermitteln. Die vorliegende Erfindung geht einen Schritt weiter und legt einen definierten Bearbeitungspfad unter Berücksichtigung des ermittelten Beeinträchtigungszustands und in Abhängigkeit einer geänderten Bearbeitungsstrategieinformation fest. Dadurch kann insbesondere der Beeinträchtigung der Kommunikationsverbindung Rechnung getragen werden und das Arbeitsgerät führt ein Bearbeitungsmanöver aus, welches speziell für diese Situation angepasst ist. Anstelle eines Stehenbleibens im Arbeitsbereich (Feld) beispielsweise kann die Bearbeitung mit entsprechend angepasstem Bearbeitungspfad fortgesetzt werden. Zudem kann eine erfolgreiche Rückkehr zu einer Lade- und/oder Dockingstation - selbst bei widrigen Bedingungen - zuverlässiger erfolgen und/oder gewährleistet werden.

Bei einer Ausbildung des mobilen Arbeitsgeräts als Mähroboter ist dieser beispielsweise imstande, Fehlereinflüsse bei der Positionsbestimmung infolge eines ermittelten, beispielsweise plötzlich auftretenden, Beeinträchtigungszustands der Kommunikationsverbindung durch eine geänderte Pfadplanung und/oder eine geänderte Fahrstrategie zu vermeiden oder zumindest vernachlässigbar zu reduzieren. Der Mähroboter ist beispielsweise innerhalb seines Arbeitsbereichs in der Lage, bei einer auftretenden Reduktion des Signalempfangs des Funknavigationssystems diese zu ermitteln und in Abhängigkeit davon die Bearbeitung anzupassen und fortzusetzen, wobei systembedingt inhärente oder auftretende Einflüsse vermieden oder reduziert werden. Die Reduktion des Signalempfangs kann beispielsweise unerwartet durch einen Lastkraftwagen entsprechender Größe verursacht werden, welcher unmittelbar neben einem zu bearbeitenden Rasen abgestellt wird und somit den Signalempfangsbereich des Funknavigationssystems verdeckt. Mit anderen Worten erhöht die Erkennung und Reaktion auf eine beeinträchtige Kommunikationsverbindung die Zuverlässigkeit der Navigation des Mähroboters und verhindert ein unerwünschtes Verlassen des Arbeitsbereichs. Der Beeinträchtigungszustand der Kommunikationsverbindung kann auch zumindest einen zeitlich vorübergehenden Ausfall der Kommunikationsverbindung umfassen.

Die Kontrolleinrichtung kann in Verbindung mit der Kommunikationseinrichtung zur im Wesentlichen kontinuierlichen und/oder periodischen Überwachung der Kommunikationsverbindung konfiguriert sein.

Die Kommunikationseinrichtung kann zur Nutzung unterschiedlicher Funknavigationstechnologien konfiguriert sein und/oder auf zumindest einer von folgenden basieren: Bluetooth Low Energy (BLE); Global Navigation Satellite System (GNSS), insbesondere Global Positioning System (GPS); Radio-Frequency Identification (RFID), Zigbee, Wireless Fidelity (Wi-Fi), Long Term Evolution (LTE) oder Ultra-Wideband (UWB).

Das mobile Arbeitsgerät ist insbesondere ein robotisches, elektrisch autark angetriebenes Arbeitsgerät. Der Beeinträchtigungszustand kann einen Störungszustand, einen Fehlerzustand und/oder einen Ausfallzustand umfassen. Die Bearbeitungsstrategieinformation kann eine Fahrstrategie definieren und beispielsweise in einer Speichereinrichtung zur temporären und/oder dauerhaften Speicherung von Navigationsinformationen gespeichert sein.

Der Bearbeitungspfad (bei Arbeitsgeräten in Form eines Mähroboters auch als "Mähpfad" oder "Trajektorie" bezeichnet) kann ferner durch zumindest eine von folgenden weiteren Informationen definiert und/oder festgelegt sein: zumindest eine Startposition (zur Festlegung des Beginns einer Bearbeitung); zumindest eine Endposition (zur Festlegung der Beendigung einer Bearbeitung); zumindest eine Referenzpunktposition (zur Festlegung des Arbeitsbereichs und/oder des Rands); zumindest eine Bewegungsrichtung, insbesondere zwischen zumindest zwei Referenzpunktpositionen; zumindest einen (zur Bearbeitung vorgesehenen) Bearbeitungsabschnitt, insbesondere mit einer jeweiligen Priorisierung; zumindest eine Positionsinformation zu zumindest einem Hindernis (zum Beispiel ein Baum, eine Mauer, etc.) und/oder zu zumindest einem Bearbeitungsausschlussabschnitt (zum Beispiel ein Blumenbeet, ein Teich, etc.); zumindest eine Geschwindigkeitsinformation, insbesondere für einen jeweiligen Bearbeitungsabschnitt des Arbeitsbereichs; zumindest einen Zeitstempel zur Festlegung von Bearbeitungszeiten, insbesondere in Abhängigkeit eines definierten Bearbeitungsplans; zumindest eine Sensorinformation, beispielsweise eines Gyroskopsensors, Regensensors, etc.; zumindest eine Ladezyklusinformation; zumindest eine Energiemanagementinformation; zumindest eine Kommunikationsinformation, insbesondere zur Ausbildung einer Kommunikationsverbindung mit einer Basisstation, einem Endgerät, insbesondere einem mobilen Endgerät, und/oder einem Server, um beispielsweise einen Status und/oder einen Fortschritt der Bearbeitung zu übertragen.

Die Bearbeitungsstrategieinformation ist insbesondere zur Festlegung des definierten Bearbeitungspfads, das heißt eines damit einhergehenden Verlaufs konfiguriert, welcher (wie oben bereits angegeben) zum Beispiel spiralförmig, zickzack-förmig, reihenförmig, mäanderförmig, geradlinienförmig, bogenförmig, in parallelen Linien oder zufällig/random sein kann.

Gemäß einem weiteren Aspekt der vorliegenden Erfindung kann vorgesehen sein, dass die geänderte Bearbeitungsstrategieinformation den definierten Bearbeitungspfad derart festlegt, dass: • eine Abweichung einer Bewegung des Arbeitsgeräts von dem definierten Bearbeitungspfad definiert reduziert oder im Wesentlichen vermieden wird; • eine Bewegung des Arbeitsgeräts gestoppt oder umgekehrt wird; und/oder • eine Bewegung des Arbeitsgeräts außerhalb eines Bearbeitungsabschnitts des Arbeitsbereichs erfolgt, welcher dem ermittelten Beeinträchtigungszustand zugeordnet ist.

Das mobile Arbeitsgerät gemäß der vorliegenden Erfindung kann konfiguriert sein, in Abhängigkeit des ermittelten Beeinträchtigungszustands der Kommunikationsverbindung unterschiedliche Bearbeitungsmanöver zu realisieren.

Es ist möglich, dass der ermittelte Beeinträchtigungszustand zumindest einen von folgenden erfassten und/oder berechneten Kommunikationsparametern umfasst, welcher der Kommunikationsverbindung und/oder dem Funknavigationssystem zugeordnet ist: • eine Anzahl verfügbarer und/oder verbundener Navigationssatelliten, insbesondere zu einem definierten Zeitpunkt und/oder für eine definierte Zeitdauer; • eine Intensität, insbesondere eine Feldstärke, zumindest eines Navigationssignals; • zumindest eine Positionsgenauigkeit in zumindest einer Richtung; • eine Qualität zumindest eines Navigationssignals hinsichtlich zumindest einer Störung, welche das zumindest eine Navigationssignal zumindest überlagert; und/oder dass der ermittelte Beeinträchtigungszustand eine Unterbrechung (Ausfall) der Kommunikationsverbindung umfasst.

Mit anderen Worten kann der Beeinträchtigungszustand der Kommunikationsverbindung durch viele und/oder unterschiedliche erfasste und/oder berechnete Kommunikationsparameter gekennzeichnet sein.

Gemäß einem weiteren Gesichtspunkt der vorliegenden Erfindung kann vorgesehen sein, dass die geänderte Bearbeitungsstrategieinformation den definierten Bearbeitungspfad derart festlegt, dass der definierte Bearbeitungspfad zumindest abschnittsweise zumindest einen von folgenden Verläufen umfasst und/oder durch zumindest einen von folgenden Verläufen gekennzeichnet ist: • im Wesentlichen senkrecht zu zumindest einer Höhenlinie einer Steigung des Bodens unter Berücksichtigung zumindest eines Steigungswinkels der Steigung; • im Wesentlichen senkrecht zu einer Tangentiallinie des Rands; • schräg zu einer Tangentiallinie des Rands unter einem Anstellwinkel, welcher insbesondere im Wesentlichen gleich oder größer als circa 45 Grad ist; • in entgegengesetzter Richtung; • im Wesentlichen krümmungsfrei.

Die zumindest eine Höhenlinie und/oder die zumindest eine Tangentiallinie kann jeweils eine resultierende und/oder idealisierte Linie sein. Bei einem ermittelten Beeinträchtigungszustand der Kommunikationsverbindung kann in Abhängigkeit der Topologie des zu bearbeitenden Arbeitsbereichs ein für diese Situation optimierter Bearbeitungspfad mittels einer geänderten Bearbeitungsstrategieinformation festgelegt werden.

Es ist möglich, dass die Kontrolleinrichtung konfiguriert ist, zur Erzeugung der geänderten Bearbeitungsstrategieinformation den ermittelten Beeinträchtigungszustand auszuwerten und die Bearbeitungsstrategieinformation unter Berücksichtigung des ausgewerteten Beeinträchtigungszustands anzupassen; und/oder dass die Kontrolleinrichtung konfiguriert ist, den ermittelten Beeinträchtigungszustand zusammen mit der Bearbeitungsstrategieinformation mittels der Kommunikationseinrichtung an zumindest eine von folgenden separaten Vorrichtungen drahtlos zu übertragen, um den ermittelten Beeinträchtigungszustand auszuwerten und die geänderte Bearbeitungsstrategieinformation unter Berücksichtigung des ausgewerteten Beeinträchtigungszustands zu empfangen: • eine Basisstation zum Betrieb des Arbeitsgeräts; • ein Endgerät, insbesondere ein mobiles Endgerät, zum Betrieb des Arbeitsgeräts; • ein Server zum Betrieb des Arbeitsgeräts.

Die Basisstation kann bei einer Ausbildung des Arbeitsgeräts als Mähroboter eine Ladestation (auch als "Dockingstation" bezeichnet) sein. Das Endgerät kann beispielsweise als eine arbeitsgerätspezifische Fernbedienung, ein Smartphone oder als ein Tablet ausgebildet sein. Der Server kann beispielsweise ein so genannter On-Premise-Server, ein so genannter Edge-Server oder ein Cloud-Computing-Server sein. Der Server kann ein virtueller Server sein.

Gemäß einem weiteren Aspekt der vorliegenden Erfindung kann vorgesehen sein, dass die Kontrolleinrichtung konfiguriert ist, mittels einer Traktionssensoreinrichtung des Arbeitsgeräts einen Traktionsverlust zwischen dem Arbeitsgerät und dem Boden in Abhängigkeit zumindest eines Ermittlungsparameters in zumindest einer von folgenden Richtungen zu ermitteln: im Wesentlichen parallel zu der Bewegungsrichtung, im Wesentlichen quer zu der Bewegungsrichtung; und dass die Kontrolleinrichtung konfiguriert ist, die Antriebseinrichtung und/oder die Fahrwerkeinrichtung unter Berücksichtigung des ermittelten Traktionsverlusts einzustellen, insbesondere zu steuern und/oder zu regeln, um zumindest einen weiteren Traktionsverlust entlang des Bearbeitungspfads definiert zu reduzieren oder im Wesentlichen zu vermeiden.

Dadurch können fahrwerkbedingte und/oder bodenbedingte Einflüsse kompensiert und/oder berücksichtigt werden, sodass die Bestimmung der Position des Arbeitsgeräts trotz einer Beeinträchtigung der Kommunikationsverbindung zur Bestimmung der Position ausreichend gewährleistet ist.

Der Ermittlungsparameter kann in Abhängigkeit der Ausbildung des mobilen Arbeitsgeräts, insbesondere als Mähroboter, beispielsweise zumindest einen von folgenden Parametern umfassen: ein Raddrehzahlsignal; eine Differenz zumindest zweier Raddrehzahlsignale; einen abgeleiteten translatorischen Geschwindigkeitswert; einen berechneten Streckenzuwachs; ein aus einem Soll- und Ist-Drehmoment der Antriebseinrichtung gebildetes Abweichungssignal; eine Antriebseinrichtungsklemmenspannung; einen mittels Dehnmessstreifen oder Kraftsensoren ermittelten Aufstandsdruck der Fahrwerkeinrichtung; einen Reibbeiwert-Schätzwert auf Basis eines Bodenfeuchtigkeits- oder Rauigkeitssensors; eine Steigungs- und/oder Gefälleinformation eines Topologiemodells des Arbeitsbereichs.

Die Kontrolleinrichtung kann mit anderen Worten zur Ermittlung eines Längsschlupfs und/oder eines Querschlupfs des mobilen Arbeitsgeräts konfiguriert sein und dies entsprechend berücksichtigen, insbesondere innerhalb eines Abschattungsbereichs.

Es ist möglich, dass zur Ermittlung des zumindest einen Traktionsverlusts durch eine Sensorfusion die Traktionssensoreinrichtung zumindest zwei von folgenden Sensorelementen umfasst: • einen Drehzahlsensor zur Erfassung einer Drehzahl des zumindest einen Antriebselements; • einen Gyroskopsensor zur Erfassung einer Orientierung (Ausrichtung), insbesondere einer Neigung, des Arbeitsgeräts in zumindest einer Richtung; • einen Beschleunigungssensor zur Erfassung einer Beschleunigung des Arbeitsgeräts in zumindest einer Richtung; • einen Gewichtssensor zur Erfassung zumindest eines Gewichtskraftanteils einer Gewichtskraft des Arbeitsgeräts auf das zumindest eine Antriebselement; • einen Kraftsensor zur Erfassung einer Abstützkraft zur Abstützung einer Werkzeugkraft einer Werkzeugeinrichtung des Arbeitsgeräts zur Bearbeitung des Bodens.

Gemäß einem weiteren Gesichtspunkt der vorliegenden Erfindung kann vorgesehen sein, dass die Kontrolleinrichtung zur Ermittlung einer Leistung zumindest einer von folgenden Einrichtungen des Arbeitsgeräts konfiguriert ist: • die Antriebseinrichtung; • die Fahrwerkeinrichtung; • eine Werkzeugeinrichtung des Arbeitsgeräts zur Bearbeitung des Bodens; und dass die Kontrolleinrichtung konfiguriert ist, den ermittelten Traktionsverlust mit der ermittelten Leistung unter Berücksichtigung von zumindest einem Verifikationsparameter zu verifizieren, und bei einer Abweichung die Antriebseinrichtung und/oder die Fahrwerkeinrichtung definiert einzustellen und den zumindest Traktionsverlust zumindest einmal wiederholt zu ermitteln.

Mit anderen Worten kann dadurch die Ermittlung eines Längsschlupfs und/oder eines Querschlupfs unter Berücksichtigung von ermittelten jeweiligen Leistungen weiter verbessert werden. Der zumindest eine Verifikationsparameter kann beispielsweise einen Schlupfgrenzwert, einen Reibschätzwert und/oder einen Steigungswinkel umfassen.

Es ist möglich, dass die Kontrolleinrichtung konfiguriert ist, den ermittelten Beeinträchtigungszustand einer Position des Arbeitsgeräts und/oder einer Lage eines Bearbeitungsabschnitts des Arbeitsbereichs zuzuordnen. Zusätzlich kann die Kontrolleinrichtung konfiguriert sein, zur Erzeugung der geänderten Bearbeitungsstrategieinformation die zugeordnete Position und/oder die zugeordnete Lage des Bearbeitungsabschnitts auszuwerten und die Bearbeitungsstrategieinformation unter Berücksichtigung der ausgewerteten Position und/oder der ausgewerteten Lage des Bearbeitungsabschnitts anzupassen.

Die vorliegende Erfindung betrifft nach einem zweiten allgemeinen Gesichtspunkt ein Verfahren zum Betrieb eines mobilen Arbeitsgeräts zur teilautonomen und/oder autonomen Bearbeitung eines Bodens eines Arbeitsbereichs entlang eines Bearbeitungspfads, wobei der Arbeitsbereich durch einen Rand drahtlos definiert ist, wobei das Arbeitsgerät eine Antriebseinrichtung zur Erzeugung einer Antriebskraft zum Antrieb des Arbeitsgeräts; eine Fahrwerkeinrichtung mit zumindest einem Antriebselement zur Übertragung der Antriebskraft auf den Boden; eine Kontrolleinrichtung zur Einstellung, insbesondere Steuerung und/oder Regelung, der Antriebseinrichtung und/oder der Fahrwerkeinrichtung in Abhängigkeit einer Bearbeitungsstrategieinformation; und eine Kommunikationseinrichtung zur Ausbildung einer Kommunikationsverbindung mit einem Funknavigationssystem umfasst; mit den Verfahrensschritten: a) Erzeugen einer Antriebskraft; b) Übertragen der erzeugten Antriebskraft auf den Boden durch das zumindest eine Antriebselement und Bewegen des Arbeitsgeräts in einer Bewegungsrichtung; c) Ausbilden einer Kommunikationsverbindung mit einem Funknavigationssystem und Bestimmen einer Position des Arbeitsgeräts; d) Ermitteln eines Beeinträchtigungszustands der Kommunikationsverbindung; e) Ändern der Bearbeitungsstrategieinformation unter Berücksichtigung des ermittelten Beeinträchtigungszustands; f) Einstellen der Antriebseinrichtung und/oder der Fahrwerkeinrichtung in Abhängigkeit der geänderten Bearbeitungsstrategieinformation, welche einen definierten Bearbeitungspfad festlegt, um zumindest ein Überfahren des Arbeitsgeräts über den Rand zu vermeiden; wobei insbesondere das Verfahren zur Ausführung mit einem Arbeitsgerät wie hierin offenbart konfiguriert ist.

Die Vorteile und Eigenschaften des erfindungsgemäßen mobilen Arbeitsgeräts treffen ebenfalls für das erfindungsgemäße Verfahren entsprechend zu, sodass auf deren Darstellung verzichtet wird, um Wiederholungen zu vermeiden.

Gemäß einem weiteren Gesichtspunkt der vorliegenden Erfindung kann vorgesehen sein, dass die geänderte Bearbeitungsstrategieinformation den definierten Bearbeitungspfad derart festlegt, dass zumindest eines von folgenden erfolgt: • Definiertes Reduzieren oder Vermeiden einer Abweichung der Bewegung des Arbeitsgeräts von dem zumindest einen definierten Bearbeitungspfad; • Stoppen oder Umkehren der Bewegung des Arbeitsgeräts; und/oder • Bewegen des Arbeitsgeräts außerhalb eines Bearbeitungsabschnitts des Arbeitsbereichs, welcher dem ermittelten Beeinträchtigungszustand zugeordnet ist.

Es ist möglich, dass das Ermitteln des Beeinträchtigungszustands ein Erfassen und/oder ein Berechnen von zumindest einem von folgenden Kommunikationsparametern umfasst, welcher der Kommunikationsverbindung und/oder dem Funknavigationssystem zugeordnet ist: • eine Anzahl verfügbarer und/oder verbundener Navigationssatelliten, insbesondere zu einem definierten Zeitpunkt und/oder für eine definierte Zeitdauer; • eine Intensität, insbesondere eine Feldstärke, zumindest eines Navigationssignals; • zumindest eine Positionsgenauigkeit in zumindest einer Richtung; • eine Qualität zumindest eines Navigationssignals hinsichtlich zumindest einer Störung, welche das zumindest eine Navigationssignal zumindest überlagert. Zusätzlich oder alternativ kann das Ermitteln des Beeinträchtigungszustands ein Erfassen einer Unterbrechung (Ausfall) der Kommunikationsverbindung umfasst.

Gemäß einem weiteren Aspekt der vorliegenden Erfindung kann vorgesehen sein, dass das Verfahren umfasst: Bewegen des Arbeitsgeräts entlang des definierten Bearbeitungspfads, welcher zumindest abschnittsweise zumindest einen von folgenden Verläufen umfasst: • im Wesentlichen senkrecht zu zumindest einer Höhenlinie einer Steigung des Bodens unter Berücksichtigung zumindest eines Steigungswinkels der Steigung; • im Wesentlichen senkrecht zu einer Tangentiallinie des Rands; • schräg zu einer Tangentiallinie des Rands unter einem Anstellwinkel, welcher insbesondere im Wesentlichen gleich oder größer als circa 45 Grad ist; • in entgegengesetzter Richtung; • im Wesentlichen krümmungsfrei.

Gemäß einem weiteren Gesichtspunkt der vorliegenden Erfindung kann vorgesehen sein, dass das Ändern der Bearbeitungsstrategieinformation umfasst: • Auswerten des ermittelten Beeinträchtigungszustands mittels der Kontrolleinrichtung; • Anpassen der Bearbeitungsstrategieinformation unter Berücksichtigung des ausgewerteten Beeinträchtigungszustands mittels der Kontrolleinrichtung.

Es ist möglich, dass das Ändern der Bearbeitungsstrategieinformation umfasst: • Drahtloses Übertragen des ermittelten Beeinträchtigungszustands zusammen mit der Bearbeitungsstrategieinformation mittels der Kommunikationseinrichtung an zumindest eine von folgenden separaten Vorrichtungen: • eine Basisstation zum Betrieb des Arbeitsgeräts; • ein Endgerät, insbesondere ein mobiles Endgerät, zum Betrieb des Arbeitsgeräts; • ein Server zum Betrieb des Arbeitsgeräts; • Auswerten des übertragenen Beeinträchtigungszustands mittels der zumindest einen Vorrichtung; • Anpassen der übertragenen Bearbeitungsstrategieinformation unter Berücksichtigung des ausgewerteten Beeinträchtigungszustands durch die zumindest eine Vorrichtung und Erzeugen der geänderten Bearbeitungsstrategieinformation; • Drahtloses Übertragen der geänderten Bearbeitungsstrategieinformation an das Arbeitsgerät mittels der zumindest einen Vorrichtung.

Das Verfahren kann umfassen: • Ermitteln eines Traktionsverlusts zwischen dem Arbeitsgerät und dem Boden durch die Kontrolleinrichtung mittels einer Traktionssensoreinrichtung des Arbeitsgeräts in Abhängigkeit zumindest eines Ermittlungsparameters in zumindest einer von folgenden Richtungen: im Wesentlichen parallel zu der Bewegungsrichtung, im Wesentlichen quer zu der Bewegungsrichtung; • Einstellen der Antriebseinrichtung und/oder der Fahrwerkeinrichtung unter Berücksichtigung des ermittelten Traktionsverlusts mittels der Kontrolleinrichtung, um zumindest einen weiteren Traktionsverlust entlang des Bearbeitungspfads definiert zu reduzieren oder im Wesentlichen zu vermeiden.

Das Ermitteln des Traktionsverlusts kann zumindest eines von folgenden umfassen: • Erfassen einer Drehzahl des zumindest einen Antriebselements mittels eines Drehzahlsensors der Traktionssensoreinrichtung; • Erfassen einer Orientierung (Ausrichtung), insbesondere einer Neigung, des Arbeitsgeräts in zumindest einer Richtung mittels eines Gyroskopsensors der Traktionssensoreinrichtung; • Erfassen einer Beschleunigung des Arbeitsgeräts in zumindest einer Richtung mittels eines Beschleunigungssensors der Traktionssensoreinrichtung; • Erfassen zumindest eines Gewichtskraftanteils einer Gewichtskraft des Arbeitsgeräts auf das zumindest eine Antriebselement mittels eines Gewichtssensors der Traktionssensoreinrichtung; • Erfassen einer Abstützkraft zur Abstützung einer Werkzeugkraft einer Werkzeugeinrichtung des Arbeitsgeräts zur Bearbeitung des Bodens mittels eines Kraftsensors der Traktionssensoreinrichtung; und Berechnen des Traktionsverlusts unter Berücksichtigung der erfassten Drehzahl, der erfassten Orientierung, der erfassten Beschleunigung, des erfassten Gewichtskraftanteils und/oder der erfassten Abstützkraft mittels der Kontrolleinrichtung.

Das Verfahren kann umfassen: • Ermitteln einer Leistung zumindest einer von folgenden Einrichtungen des Arbeitsgeräts mittels der Kontrolleinrichtung: die Antriebseinrichtung; die Fahrwerkeinrichtung; eine Werkzeugeinrichtung des Arbeitsgeräts zur Bearbeitung des Bodens; • Verifizieren des ermittelten Traktionsverlusts mit der ermittelten Leistung in Abhängigkeit von zumindest einem Verifikationsparameter; • Definiertes Einstellen der Antriebseinrichtung und/oder der Fahrwerkeinrichtung bei einer Abweichung von dem zumindest einen Verifikationsparameter und zumindest einmal Wiederholen des Ermittelns des Traktionsverlusts.

Die vorliegende Erfindung betrifft nach einem dritten allgemeinen Gesichtspunkt ein System, umfassend: • ein Arbeitsgerät, welches wie hierin offenbart konfiguriert ist; • zumindest eine von folgenden separaten Vorrichtungen, welche jeweils zur Ausbildung einer drahtlosen Kommunikationsverbindung mit der Kommunikationseinrichtung des Arbeitsgeräts konfiguriert ist: • eine Basisstation zum Betrieb des Arbeitsgeräts; • ein Endgerät, insbesondere ein mobiles Endgerät, zum Betrieb des Arbeitsgeräts; • ein Server zum Betrieb des Arbeitsgeräts; wobei die Basisstation, das Endgerät und/oder der Server jeweils zur Erzeugung einer geänderten Bearbeitungsstrategieinformation konfiguriert sind, wobei insbesondere das System zur Ausführung eines Verfahrens wie hierin offenbart konfiguriert ist.

Zur Vermeidung von Wiederholungen sollen rein auf die Vorrichtung des erfindungsgemäßen Arbeitsgeräts gerichtete und/oder damit in Zusammenhang offenbarte Merkmale auch als verfahrensgemäß offenbart gelten und beanspruchbar sein und umgekehrt.

Die zuvor beschriebenen Ausführungsbeispiele und Merkmale der vorliegenden Erfindung sind beliebig oder zweckmäßig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1: ein erstes Ausführungsbeispiel eines Systems gemäß der vorliegenden Erfindung mit einem ersten Ausführungsbeispiel des Arbeitsgeräts gemäß der vorliegenden Erfindung, wobei sich das Arbeitsgerät in einem ersten Betriebszustand befindet;
- Fig. 2: das System aus Figur 1 mit dem Arbeitsgerät in einem zweiten Betriebszustand, wobei einige Vorrichtungen, Einrichtungen und Elemente ausgeblendet sind;
- Fig. 3: das System aus Figur 1 mit dem Arbeitsgerät in einem dritten Betriebszustand, wobei einige Vorrichtungen, Einrichtungen und Elemente ausgeblendet sind;
- Fig. 4: das System aus Figur 1 mit dem Arbeitsgerät in einem vierten Betriebszustand, wobei einige Vorrichtungen, Einrichtungen und Elemente ausgeblendet sind.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

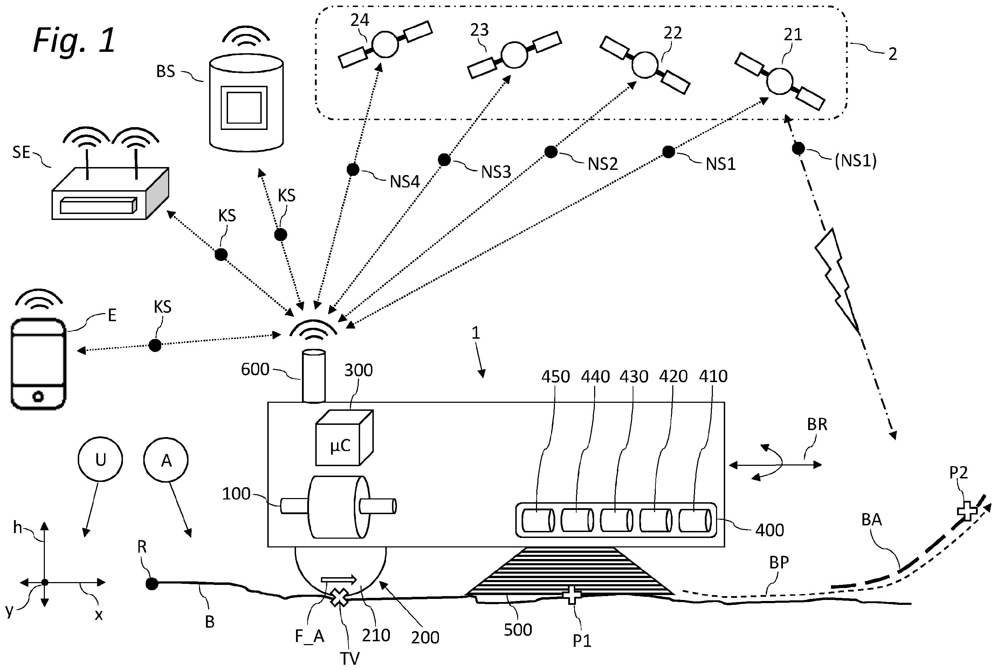

Figur 1 zeigt ein erstes Ausführungsbeispiel eines Systems gemäß der vorliegenden Erfindung mit einem ersten Ausführungsbeispiel des mobilen Arbeitsgeräts 1 gemäß der vorliegenden Erfindung und mit weiteren Vorrichtungen in einer schematischen Darstellung.

Das mobile Arbeitsgerät 1 ist ein mobiles funknavigationsbasiertes Arbeitsgerät 1. Das mobile Arbeitsgerät 1 befindet sich in einem ersten Betriebszustand der Bearbeitung eines Bodens B eines Arbeitsbereichs A entlang eines Bearbeitungspfads BP. Nachfolgend wird der Einfachheit halber der Begriff "mobil" in Verbindung mit dem Arbeitsgerät 1 weggelassen.

Das Arbeitsgerät 1 ist als ein (selbstfahrender) funknavigationsbasierter Mähroboter 1 ausgebildet, welcher zur teilautonomen Bearbeitung und/oder zur autonomen Bearbeitung des Bodens B des Arbeitsbereichs A konfiguriert ist. Das Arbeitsgerät 1 ist hinsichtlich des Arbeitsbereichs A ein eingelerntes Arbeitsgerät 1. Der Arbeitsbereich A kann ein geographisch definierter Bereich sein und umfasst eine Pflanzenvegetation (insbesondere in Form eines Rasens), welche zur Bearbeitung, insbesondere zum Mähen, vorgesehen ist. Der Arbeitsbereich A kann beispielsweise ein Bestandteil eines Gartens, einer Sportanlage, eines Friedhofs oder eines Parks sein.

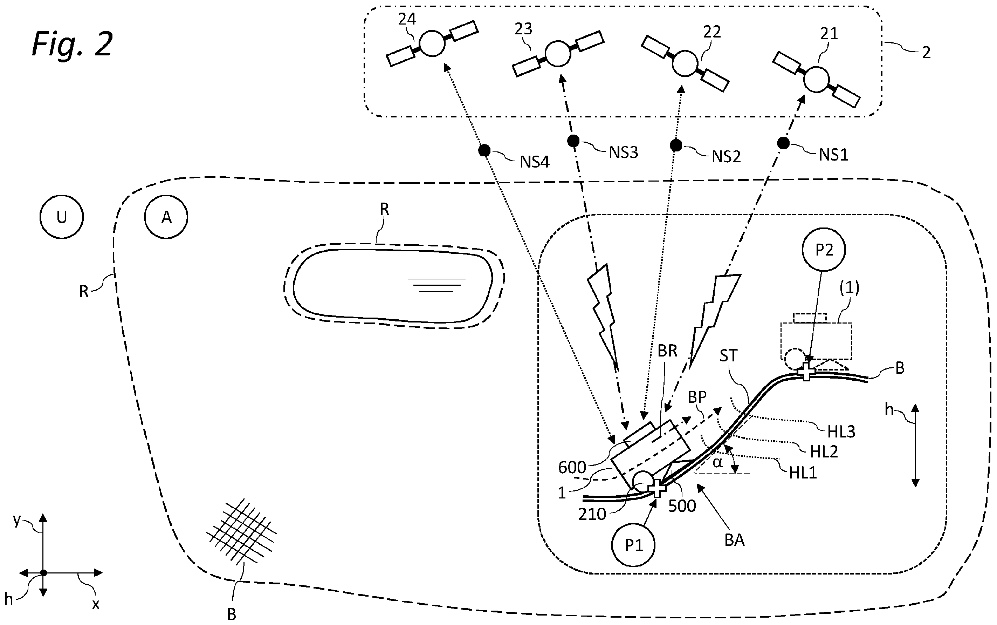

Der Arbeitsbereich A ist durch einen Rand R drahtlos definiert. Der Arbeitsbereich A ist durch den Rand R gegenüber einem Umgebungsbereich U mit jeweiligen Umgebungsoberflächen definiert und/oder abgegrenzt. Der Rand R kann in Form einer resultierenden Randlinie und/oder eines Randbereichs mit einer definierten Randbreite (Randstreifen) den Arbeitsbereich A von dem Umgebungsbereich U abgrenzen und/oder definieren. Ferner kann ein Rand R auch innerhalb des Arbeitsbereichs A definiert sein, um beispielsweise einen Bearbeitungsausschlussabschnitt (Bearbeitungsausschlusszone) des Arbeitsbereichs A zu definieren (siehe hierzu die weiteren Figuren 2 bis 4). Der Bearbeitungsausschlussabschnitt kann bei einem Arbeitsbereich A in Form eines Gartens beispielsweise ein Teich oder ein Blumenbeet sein.

Der Mähroboter 1 umfasst eine Antriebseinrichtung 100 in Form eines Elektromotors zur Erzeugung einer Antriebskraft F_A zum Antrieb des Mähroboters 1. Der Mähroboter 1 umfasst ferner eine Fahrwerkeinrichtung 200 mit zumindest einem Antriebselement 210 zur Übertragung der (erzeugten) Antriebskraft F_A auf den Boden B, um das Arbeitsgerät 1 in einer Bewegungsrichtung BR entlang des Bearbeitungspfads BP zu bewegen. Das zumindest eine Antriebselement 210 kann ein Antriebsrad sein.

Der Mähroboter 1 umfasst eine Kontrolleinrichtung 300. Die Kontrolleinrichtung 300 ist zur Einstellung, insbesondere Steuerung und/oder Regelung, des Mähroboters 1 konfiguriert und umfasst beispielsweise ein Mikroprozessormodul mit zumindest einer elektronischen Recheneinheit zur Verarbeitung eines Algorithmus eines Computerprogrammprodukts in einer Laufzeitumgebung. Der Algorithmus kann zur Ausführung eines Verfahrens zum Betrieb des Mähroboters 1 wie hierin offenbart konfiguriert sein. Die Kontrolleinrichtung 300 umfasst beispielsweise ferner ein Schnittstellenmodul zur Herstellung einer Verbindung mit weiteren Einrichtungen, Modulen und/oder Elementen (insbesondere Sensorelementen) des Mähroboters 1.

Der Mähroboter 1 umfasst zur Bestimmung einer Position P1, P2 des Arbeitsgeräts 1 eine Kommunikationseinrichtung 600 zur Ausbildung einer funksignalbasierten (drahtlosen) Kommunikationsverbindung mit einem Funknavigationssystem 2. Das Funknavigationssystem 2 ist insbesondere ein satellitengestütztes Navigationssystem 2. Das Funknavigationssystem 2 kann ein globales Navigationssatellitensystem (GNSS) sein, insbesondere das so genannte Global Positioning System (GPS). Das Funknavigationssystem 2 umfasst eine Mehrzahl von Navigationssatelliten, von welchen in den Figuren 1 bis 4 die Navigationssatelliten 21, 22, 23 und 24 dargestellt und gekennzeichnet sind.

Die Kommunikationseinrichtung 600 ist zur Ausbildung einer Kommunikationsverbindung mit dem Funknavigationssystem 2, das heißt mit den Navigationssatelliten 21, 22, 23, 24 konfiguriert, um insbesondere Navigationssignale NS1, NS2, NS3, NS4 zur Bestimmung der Position P1, P2 des Mähroboters 1 innerhalb des Arbeitsbereichs A zu empfangen. Die Bestimmung der Position P1, P2 kann in Verbindung mit der Kontrolleinrichtung 300 und weiterer (ausgeblendeter) Einrichtungen erfolgen, beispielsweise einer Speichereinrichtung zur temporären und/oder dauerhaften Speicherung von Navigationsinformationen. Die Kommunikationseinrichtung 600 kann in einer Ausbildung des Mähroboters 1 ein integraler Bestandteil der Kontrolleinrichtung 300 sein. Alternativ ist es möglich, dass die Kommunikationseinrichtung 600 eine separate Einrichtung ist.

Die Kommunikationseinrichtung 600 kann als Signalsende- und/oder Signalempfangseinrichtung zur Nutzung unterschiedlicher Funknavigationstechnologien konfiguriert sein und/oder auf zumindest einer von folgenden basieren: Global Navigation Satellite System (GNSS), insbesondere Global Positioning System (GPS); Bluetooth Low Energy (BLE); Radio-Frequency Identification (RFID), Zigbee, Wireless Fidelity (Wi-Fi), Mobilfunk (3G, 4G, 5G, etc.), Long Term Evolution (LTE) und/oder Ultra-Wideband (UWB). Dadurch ist neben der Kommunikationsverbindung mit dem Funknavigationssystem 2 ferner die Ausbildung zumindest einer weiteren Kommunikationsverbindung KS mit den separaten Vorrichtungen BS, E, SE des Systems möglich, welche zum Betrieb des Mähroboters 1 ausgebildet und/oder konfiguriert sind.

Die Vorrichtung BS ist eine Basisstation BS und somit eine Ladestation (auch als "Dockingstation" bezeichnet) für den Mähroboter 1. Das Endgerät E kann beispielsweise eine arbeitsgerätspezifische Fernbedienung, ein Smartphone oder ein Tablet sein. Das Endgerät E kann ein mobiles handtragbares Endgerät E sein. Der Server SE kann beispielsweise ein so genannter On-Premise-Server, ein so genannter Edge-Server oder ein Cloud-Computing-Server sein.

Der Mähroboter 1 umfasst eine Traktionssensoreinrichtung 400 mit Sensorelementen 410, 420, 430, 440, 450. Die Traktionssensoreinrichtung 400 dient in Verbindung mit der Kontrolleinrichtung 300 dazu, einen Traktionsverlust TV zwischen dem Mähroboter 1 und dem Boden B in Abhängigkeit eines Ermittlungsparameters wie hierin offenbart in zumindest einer von folgenden Richtungen zu ermitteln: im Wesentlichen parallel zu der Bewegungsrichtung BR, im Wesentlichen quer zu der Bewegungsrichtung BR. Mit anderen Worten kann mittels der Traktionssensoreinrichtung 400 ein so genannter Längsschlupf und/oder ein so genannter Querschlupf ermittelt werden. Querschlupf verursacht ein (unkontrolliertes) Driften des Mähroboters 1 und entsteht beispielsweise infolge variierender Verhältnisse des Bodens B und insbesondere dann, wenn das zumindest eine Antriebselement 210 seitlich abrutscht, was wiederum zu einer Abweichung des Mähroboters 1 von dem Bearbeitungspfad BP (Soll-Trajektorie) führt.

Die Traktionssensoreinrichtung 400 umfasst zumindest zwei von folgenden Sensorelementen 410, 420, 430, 440, 450: einen Drehzahlsensor 410 zur Erfassung einer Drehzahl des zumindest einen Antriebselements 210; einen Gyroskopsensor 420 zur Erfassung einer Orientierung, insbesondere einer Neigung, des Mähroboters 1 in zumindest einer Richtung x, y, h; einen Beschleunigungssensor 430 zur Erfassung einer Beschleunigung des Mähroboters 1 in zumindest einer Richtung x, y, h; einen Gewichtssensor 440 zur Erfassung zumindest eines Gewichtskraftanteils einer Gewichtskraft des Mähroboters 1 auf das zumindest eine Antriebselement 210; einen Kraftsensor 450 zur Erfassung einer Abstützkraft zur Abstützung einer Werkzeugkraft einer Werkzeugeinrichtung 500 des Mähroboters 1 zur Bearbeitung des Bodens B. Mit mindestens zwei Sensorelementen 410, 420, 430, 440, 450 kann eine so genannte Sensorfusion zur Ermittlung von Längsschlupf und/oder Querschlupf realisiert werden.

Der Mähroboter 1 umfasst eine Werkzeugeinrichtung 500, welche zum Antrieb mit der Antriebseinrichtung 100 gekoppelt ist. Die Werkzeugeinrichtung 500 kann in Form eines Schneidmessers, Messerbalkens oder einer Messerscheibe ausgebildet sein.

Der Bearbeitungspfad BP des Mähroboters 1 ist insbesondere durch eine Bearbeitungsstrategieinformation definiert und/oder festgelegt. Die Bearbeitungsstrategieinformation kann in einer Speichereinrichtung des Mähroboters 1, der Basisstation, des Endgeräts E und/oder des Servers SE gespeichert sein. Die Bearbeitungsstrategieinformation kann vor allem Informationen zur Bewegung des Mähroboters 1 und zum Verlauf des Bearbeitungspfads BP festlegen. Der Bearbeitungspfad BP kann beispielsweise durch einen von folgenden Verläufen gekennzeichnet sein und/oder zumindest einen von folgenden Verläufen umfassen: spiralförmig, zickzack-förmig, reihenförmig, mäanderförmig, geradlinienförmig, bogenförmig, in parallelen Linien, zufällig/random.

Der Bearbeitungspfad BP kann ferner durch zumindest eine von folgenden weiteren Informationen definiert und/oder festgelegt sein: zumindest eine Startposition (zur Festlegung des Beginns einer Bearbeitung, siehe hierzu die Position P1); zumindest eine Endposition (zur Festlegung der Beendigung einer Bearbeitung, siehe hierzu die Position P2); zumindest eine Referenzpunktposition (zur Festlegung des Arbeitsbereichs A und/oder des Rands R); zumindest eine Bewegungsrichtung BR, insbesondere zwischen zumindest zwei Referenzpunktpositionen; zumindest einen (zur Bearbeitung vorgesehenen) Bearbeitungsabschnitt BA, insbesondere mit einer jeweiligen Priorisierung; zumindest eine Positionsinformation zu zumindest einem Hindernis (zum Beispiel ein Baum, eine Mauer, etc.) und/oder zu zumindest einem Bearbeitungsausschlussabschnitt (zum Beispiel ein Blumenbeet, ein Teich, etc.); zumindest eine Geschwindigkeitsinformation, insbesondere für einen jeweiligen Bearbeitungsabschnitt BA des Arbeitsbereichs A; zumindest einen Zeitstempel zur Festlegung von Bearbeitungszeiten, insbesondere in Abhängigkeit eines definierten Bearbeitungsplans; zumindest eine Sensorinformation, beispielsweise eines Gyroskopsensors, Regensensors, etc.; zumindest eine Ladezyklusinformation; zumindest eine Energiemanagementinformation; zumindest eine Kommunikationsinformation, insbesondere zur Ausbildung einer Kommunikationsverbindung KS mit der Basisstation BS, dem Endgerät E und/oder dem Server SE, um beispielsweise einen Status und/oder einen Fortschritt der Bearbeitung zu übertragen.

Es ist möglich, dass einige der aufgezählten Informationen einen Bestandteil der Bearbeitungsstrategieinformation bilden. Die Bearbeitungsstrategieinformation kann insbesondere auch Navigationsinformationen hinsichtlich des Arbeitsbereichs A und/oder des Rands R umfassen, welche beispielsweise während eines Einlernvorgangs des Mähroboters 1 erzeugt wurden.

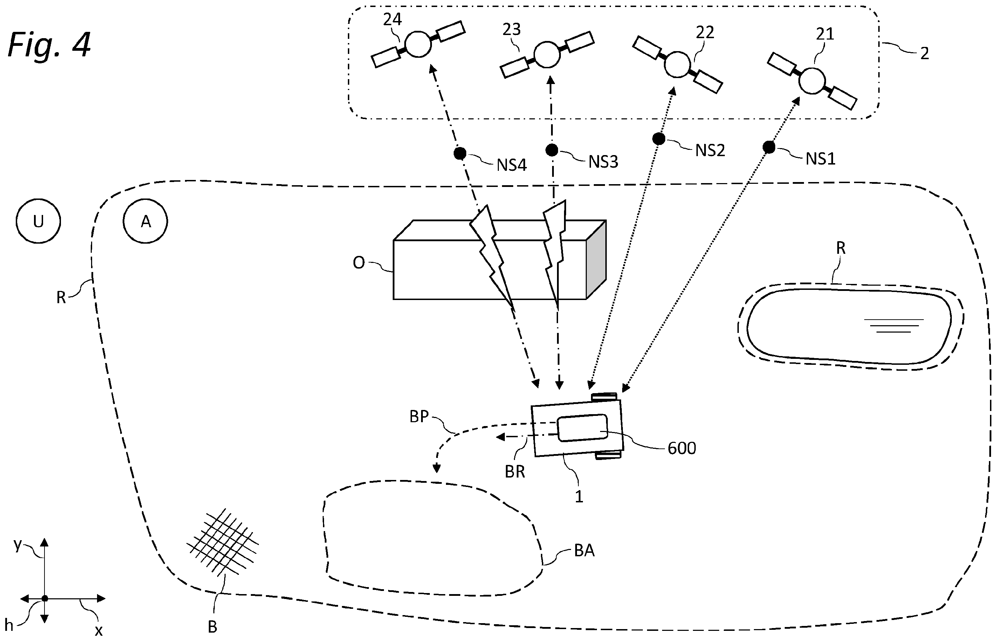

Technologiebedingt kann es während eines Bearbeitungszustands des Mähroboters 1 hinsichtlich der Kommunikationsverbindung mit dem Funknavigationssystem 2 zu Beeinträchtigungen kommen, welche unterschiedliche Ursachen haben können. Beispielsweise kann eine Reduktion des Empfangs von Navigationssignalen NS1, NS2, NS3, NS4 durch einen Lastkraftwagen entsprechender Größe als Abschirmobjekt O (siehe hierzu Figur 4) verursacht werden, welcher unmittelbar neben dem zu bearbeitenden Arbeitsbereich A abgestellt wird und somit den Signalempfangsbereich des Funknavigationssystems 2 verdeckt. Ferner können technologiebedingt beispielsweise atmosphärische Störungen auftreten, welche die Kommunikationsverbindung zwischen dem Mähroboter 1 und dem Funknavigationssystem 2 beeinträchtigen. Mit jeweiligen kommunikationsbeeinträchtigenden Ereignissen einhergehend entstehen so genannte Abschattungsbereiche innerhalb des Arbeitsbereichs A, welche temporär und somit zeitlich vorübergehend auftreten.

In Figur 1 ist zur Veranschaulichung symbolisch und beispielhaft eine beeinträchtigte Kommunikationsverbindung mit dem Navigationssatelliten 21 für den Bearbeitungsbereich BA, welcher die Position P2 umfasst, durch einen Blitz dargestellt.

Um einer derartigen, in der Regel temporär auftretenden Situation gerecht zu werden, ist die Kontrolleinrichtung 300 zur Ermittlung eines Beeinträchtigungszustands der Kommunikationsverbindung mit dem Funknavigationssystem 2 konfiguriert. Die Kontrolleinrichtung 300 kann in Verbindung mit der Kommunikationseinrichtung 600 zur im Wesentlichen kontinuierlichen und/oder periodischen Überwachung dieser Kommunikationsverbindung konfiguriert sein.

Der ermittelte Beeinträchtigungszustand kann zumindest einen von folgenden erfassten und/oder berechneten Kommunikationsparametern umfassen, welcher der Kommunikationsverbindung und/oder dem Funknavigationssystem 2 zugeordnet ist: eine Anzahl verfügbarer und/oder verbundener Navigationssatelliten 21, 22, 23, 24, insbesondere zu einem definierten Zeitpunkt und/oder für eine definierte Zeitdauer; eine Intensität, insbesondere eine Feldstärke, zumindest eines Navigationssignals NS1, NS2, NS3, NS4; zumindest eine Positionsgenauigkeit in zumindest einer Richtung x, y, h; eine Qualität zumindest eines Navigationssignals NS1, NS2, NS3, NS4 hinsichtlich zumindest einer Störung, welche das zumindest eine Navigationssignal NS1, NS2, NS3, NS4 zumindest überlagert.

Der ermittelte Beeinträchtigungszustand kann einen Störungszustand, einen Fehlerzustand und/oder einen Ausfallzustand der Kommunikationsverbindung zwischen dem Mähroboter 1 und dem Funknavigationssystem 2 umfassen.

Der Mähroboter 1 gemäß der vorliegenden Erfindung ist konfiguriert, nicht nur empfangene Navigationssignale NS1, NS2, NS3, NS4 zur Bestimmung der Position P1, P2 auszuwerten, sondern zusätzlich die Kommunikationsverbindung mit dem Funknavigationssystem 2 an sich zu überwachen, insbesondere sensorisch zu überwachen.

Die Kontrolleinrichtung 300 ist konfiguriert, die Antriebseinrichtung 100 und/oder die Fahrwerkeinrichtung 200 in Abhängigkeit einer geänderten Bearbeitungsstrategieinformation einzustellen, insbesondere zu steuern und/oder zu regeln, welche unter Berücksichtigung des ermittelten Beeinträchtigungszustands der Kommunikationsverbindung einen definierten (geänderten) Bearbeitungspfad BP festlegt, um insbesondere zumindest ein Überfahren des Mähroboters 1 über den Rand R zu vermeiden.

Die geänderte Bearbeitungsstrategieinformation kann den definierten Bearbeitungspfad BP derart festlegen, dass: eine Abweichung einer Bewegung des Mähroboters 1 von dem definierten Bearbeitungspfad BP definiert reduziert oder im Wesentlichen vermieden wird; eine Bewegung des Mähroboters 1 gestoppt oder umgekehrt wird; und/oder eine Bewegung des Mähroboters 1 außerhalb desjenigen Bearbeitungsabschnitts BA des Arbeitsbereichs A erfolgt, welcher dem ermittelten Beeinträchtigungszustand der Kommunikationsverbindung zugeordnet ist.

Die Kontrolleinrichtung 300 ist zur Änderung der Bearbeitungsstrategieinformation in Abhängigkeit des ermittelten Beeinträchtigungszustands der Kommunikationsverbindung konfiguriert, insbesondere infolge einer Auswertung des Beeinträchtigungszustands. Es ist zusätzlich möglich, dass die Kontrolleinrichtung 300 in Verbindung mit der Kommunikationseinrichtung 600 konfiguriert ist, den ermittelten Beeinträchtigungszustand zusammen mit der Bearbeitungsstrategieinformation an die Basisstation BS, das Endgerät E und/oder an den Server SE zur Auswertung und Änderung der Bearbeitungsstrategieinformation (drahtlos) zu übertragen und eine geänderte Bearbeitungsstrategieinformation (infolge einer Auswertung) zu empfangen und in Abhängigkeit davon die Antriebseinrichtung 100 und/oder die Fahrwerkeinrichtung 200 einzustellen, um den definierten Bearbeitungspfad BP zu realisieren.

Figur 2 zeigt das System aus Figur 1 mit dem Mähroboter 1 in einem zweiten Betriebszustand zur näheren Veranschaulichung und weiteren Erläuterung der vorliegenden Erfindung, wobei einige Vorrichtungen (beispielsweise die Basisstation BS, das Endgerät E, der Server SE), Einrichtungen (beispielsweise die Antriebseinrichtung 100) und Elemente (beispielsweise die Sensoren 410, 420, 430, 440, 450) ausgeblendet sind.

Der Mähroboter 1 befindet sich innerhalb eines Bearbeitungsabschnitts BA (Bearbeitungszone) am Beginn einer Steigung ST des Bodens B. Innerhalb des Bearbeitungsabschnitts BA ist die Kommunikationsverbindung mit dem Funknavigationssystem 2 beeinträchtigt. Der Beeinträchtigungszustand kann beispielsweise dadurch gegeben sein, dass eine Übertragung von Navigationssignalen NS1, NS3 der Navigationssatelliten 21 und 23 unterbrochen ist (in Figur 2 jeweils symbolischen mit einem Blitz dargestellt), sodass eine genaue (ausreichende) Bestimmung von Positionen P1, P2 des Mähroboters 1 nicht erfolgen kann.

Die Kontrolleinrichtung 300 ist konfiguriert, den Beeinträchtigungszustand der Kommunikationsverbindung zu ermitteln und unter Berücksichtigung der Ermittlung des Beeinträchtigungszustands die Bearbeitungsstrategieinformation hinsichtlich der Steigung ST zu ändern und wiederum in Abhängigkeit davon den definierten Bearbeitungspfad BP derart festzulegen, dass der definierte Bearbeitungspfad BP abschnittsweise einen im Wesentlichen senkrechten Verlauf zu zumindest einer Höhenlinie HL1, HL2, HL3 der Steigung ST umfasst, insbesondere unter Berücksichtigung des Steigungswinkels α der Steigung ST. Dadurch kann beispielsweise ein Driften des Mähroboters 1 und damit einhergehende Ungenauigkeiten definiert reduziert oder im Wesentlichen vermieden werden. Die Kontrolleinrichtung 300 kann auch konfiguriert sein, mittels den (noch) empfangbaren Navigationssignalen NS2 und NS4 der Navigationssatelliten 22 und 24 die Steigung ST zu ermitteln, beispielsweise mittels der Methode der Triangulation. Zusätzlich oder alternativ kann die Steigung ST auch durch Ermittlung einer Leistungsaufnahme durch das zumindest eine Antriebselement 210 ermittelt werden, um in Abhängigkeit davon die Bearbeitungsstrategieinformation zu ändern.

Der Mähroboter 1 ist imstande, trotz eines Beeinträchtigungszustands der Kommunikationsverbindung einen daran angepassten Bearbeitungsvorgang mit reduzierten Einflüssen oder Einflussgrößen fortzusetzen.

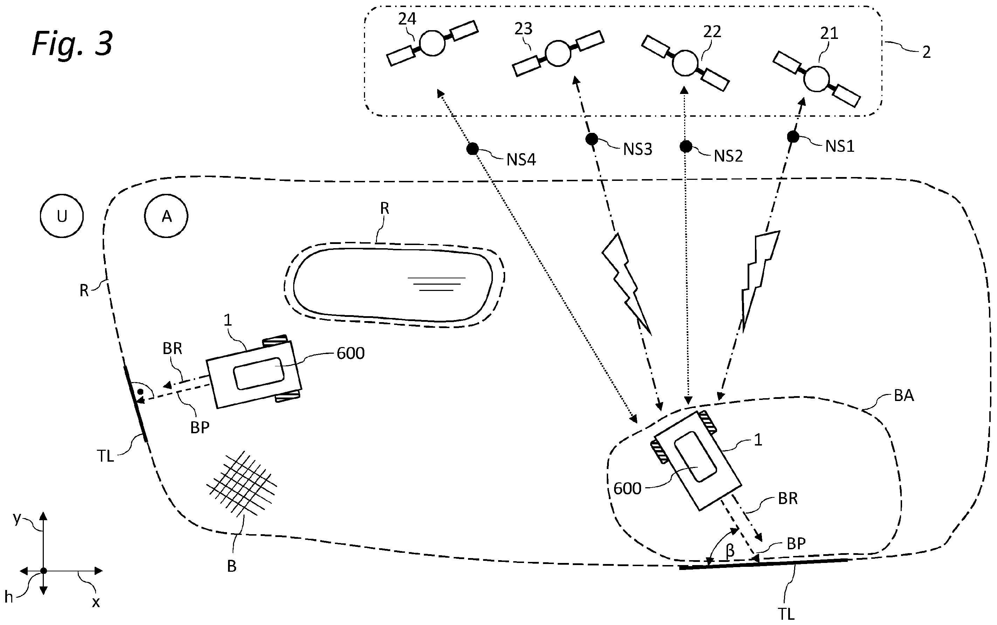

Figur 3 zeigt das System aus Figur 1 mit dem Mähroboter 1 in einem dritten Betriebszustand zur näheren Veranschaulichung und weiteren Erläuterung der vorliegenden Erfindung, wobei wiederum jeweilige Vorrichtungen, Einrichtungen und Elemente ausgeblendet und/oder nicht gekennzeichnet sind.

Ein Beeinträchtigungszustand der Kommunikationsverbindung mit dem Funknavigationssystem 2 hinsichtlich der Navigationssatelliten 21 und 23 und der damit verbundenen Unterbrechung empfangbarer Navigationssignale NS1 und NS3 in einem Abschattungsbereich des Arbeitsbereichs A hat eine entsprechende Einstellung des Mähroboters 1 mittels der Kontrolleinrichtung 300 zur Folge. Der Mähroboter 1 befindet sich in dem dritten Bearbeitungszustand in unmittelbarer Nähe des Rands R und/oder zu dem Rand R.

Die Kontrolleinrichtung 300 ist konfiguriert, den Beeinträchtigungszustand der Kommunikationsverbindung zu ermitteln und unter Berücksichtigung der Ermittlung des Beeinträchtigungszustands die Bearbeitungsstrategieinformation zu ändern und wiederum in Abhängigkeit davon den definierten Bearbeitungspfad BP derart festzulegen, dass der definierte Bearbeitungspfad BP einen Verlauf umfasst oder durch einen Verlauf gekennzeichnet ist, welcher schräg zu einer Tangentiallinie TL des Rands R unter einem Anstellwinkel β ist. Der Anstellwinkel β kann insbesondere im Wesentlichen gleich oder größer als circa 45 Grad zu der Tangentiallinie TL sein, womit technologiebedingte und/oder bodenbedingte Einflüsse wie hierin offenbart zumindest reduziert werden können.

Darüber hinaus ist in Figur 3 alternativ ein weiterer definierter Bearbeitungspfad BP, welcher durch eine geänderte Bearbeitungsstrategieinformation unter Berücksichtigung des Beeinträchtigungszustands festgelegt wird, darstellt.

Der definierte Bearbeitungspfad BP ist derart festgelegt, dass sein Verlauf im Wesentlichen geradlinig und im Wesentlichen senkrecht zu einer Tangentiallinie TL des Rands R verläuft. Dies kann beispielsweise dann der Fall sein, wenn sich der Mähroboter 1 innerhalb eines definierten Abstands oder Abstandbereichs zu dem Rand R befindet und ein Abschattungsbereich unerwartet auftritt.

Es ist möglich, dass infolge einer ermittelten weiteren Veränderung, insbesondere Verschlechterung, des Beeinträchtigungszustands der Kommunikationsverbindung der definierte Bearbeitungspfad BP aufgrund einer weiteren Änderung, insbesondere Anpassung, der Bearbeitungsstrategieinformation erneut festgelegt wird, und beispielsweise einen Stopp oder ein Umkehren der Bewegung des Mähroboters 1 (Bewegen in entgegengesetzter Richtung) umfasst.

Figur 4 zeigt das System aus Figur 1 mit dem Mähroboter 1 in einem vierten Betriebszustand zur näheren Veranschaulichung und weiteren Erläuterung der vorliegenden Erfindung, wobei wiederum jeweilige Vorrichtungen, Einrichtungen und Elemente ausgeblendet und/oder nicht gekennzeichnet sind. Der Mähroboter 1 befindet sich im Wesentlichen innerhalb des Arbeitsbereichs 1 und mit einem vergleichsweise großen Abstand zu einem Rand R.

Ein Abschirmungsobjekt O ist während des Bearbeitungszustands des Mähroboters 1 zu einem Zeitpunkt unerwartet aufgetreten, sodass die Kommunikationsverbindung zwischen dem Mähroboter 1 und den Navigationssatelliten 23 und 24 durch das Abschirmungsobjekt O unterbrochen ist. Die Kommunikationseinrichtung 600 kann von den Navigationssatelliten 23 und 24 keine Navigationssignale NS3, NS4 empfangen, welche zur genauen Bestimmung der Position des Mähroboters 1 entlang des Bearbeitungspfads 1 benötigt würden.

Die Kontrolleinrichtung 300 ist (in Verbindung mit der Kommunikationseinrichtung 600) konfiguriert, im Zuge der Bewegung des Mähroboters 1 in der Bewegungsrichtung BR entlang des Bearbeitungspfads BP den Beeinträchtigungszustand der Kommunikationsverbindung allmählich und/oder im Wesentlichen kontinuierlich zu ermitteln. Ferner ist die Kontrolleinrichtung 300 konfiguriert, in Abhängigkeit davon die Bearbeitungsstrategieinformation entsprechend zu ändern und unter Berücksichtigung des ermittelten Beeinträchtigungszustands einen definierten Bearbeitungspfad BP festzulegen und die Antriebseinrichtung 100 und/oder die Fahrwerkeinrichtung 200 in Abhängigkeit davon einzustellen.

Der Verlauf des definierten Bearbeitungspfads BP ist derart festlegt, dass dieser aus dem Abschattungsbereich beispielsweise herausführt und der Mähroboter 1 sich zu einem Bearbeitungsabschnitt BA hinbewegt, bei welchem kein Beeinträchtigungszustand der Kommunikationsverbindung mit dem Funknavigationssystem 2 auftritt.

Die vorliegende Erfindung ist nicht auf die vorstehend beschriebenen Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Vorzugsweise beansprucht die vorliegende Erfindung auch Schutz für den Gegenstand und die Merkmale der Unteransprüche unabhängig von den in Bezug genommenen Ansprüchen.

### Bezugszeichenliste

- 1: mobiles Arbeitsgerät
- 2: Funknavigationssystem
- 21: Navigationssatellit
- 22: Navigationssatellit
- 23: Navigationssatellit
- 24: Navigationssatellit
- 100: Antriebseinrichtung
- 200: Fahrwerkeinrichtung
- 210: Antriebselement
- 300: Kontrolleinrichtung
- 400: Traktionssensoreinrichtung
- 410: Drehzahlsensor
- 420: Gyroskopsensor
- 430: Beschleunigungssensor
- 440: Gewichtssensor
- 450: Kraftsensor
- 500: Werkzeugeinrichtung
- 600: Kommunikationseinrichtung

- A: Arbeitsbereich
- B: Boden
- BA: Bearbeitungsabschnitt
- BP: Bearbeitungspfad
- BR: Bewegungsrichtung
- BS: Basisstation
- F_A: Antriebskraft
- E: Endgerät
- HL1: Höhenlinie
- HL2: Höhenlinie
- HL3: Höhenlinie
- KS: Kommunikationsverbindung
- NS1: Kommunikationsverbindung
- NS2: Kommunikationsverbindung
- NS3: Kommunikationsverbindung
- NS4: Kommunikationsverbindung
- O: Abschirmungsobjekt
- P1: Position
- P2: Position
- SE: Server
- ST: Steigung
- TL: Tangentiallinie
- TV: Traktionsverlust
- U: Umgebungsbereich
- x: Richtung
- y: Richtung
- h: Richtung

- α: Steigungswinkel
- β: Anstellwinkel

## Patentansprüche

1. Mobiles Arbeitsgerät (1) zur teilautonomen und/oder autonomen Bearbeitung eines Bodens (B) eines Arbeitsbereichs (A) entlang eines Bearbeitungspfads (BP), wobei der Arbeitsbereich (A) durch einen Rand (R) drahtlos definiert ist, umfassend:
• eine Antriebseinrichtung (100) zur Erzeugung einer Antriebskraft (F_A) zum Antrieb des Arbeitsgeräts (1);
• eine Fahrwerkeinrichtung (200) mit zumindest einem Antriebselement (210) zur Übertragung der Antriebskraft (F_A) auf den Boden (B), um das Arbeitsgerät (1) in einer Bewegungsrichtung (BR) zu bewegen;
• eine Kontrolleinrichtung (300) zur Einstellung, insbesondere Steuerung und/oder Regelung, der Antriebseinrichtung (100) und/oder der Fahrwerkeinrichtung (200) in Abhängigkeit einer Bearbeitungsstrategieinformation;
• eine Kommunikationseinrichtung (600) zur Ausbildung einer Kommunikationsverbindung (NS1, NS2, NS3, NS4) mit einem Funknavigationssystem (2) zur Bestimmung einer Position (P1, P2) des Arbeitsgeräts (1);
wobei die Kontrolleinrichtung (300) zur Ermittlung eines Beeinträchtigungszustands der Kommunikationsverbindung (NS1, NS2, NS3, NS4) konfiguriert ist, und
wobei die Kontrolleinrichtung (300) konfiguriert ist, die Antriebseinrichtung (100) und/oder die Fahrwerkeinrichtung (200) in Abhängigkeit einer geänderten Bearbeitungsstrategieinformation einzustellen, welche unter Berücksichtigung des ermittelten Beeinträchtigungszustands einen definierten Bearbeitungspfad (BP) festlegt, um zumindest ein Überfahren des Arbeitsgeräts (1) über den Rand (R) zu vermeiden.

2. Arbeitsgerät (1) nach Anspruch 1,
wobei die geänderte Bearbeitungsstrategieinformation den definierten Bearbeitungspfad (BP) derart festlegt, dass:
• eine Abweichung einer Bewegung des Arbeitsgeräts (1) von dem definierten Bearbeitungspfad (BP) definiert reduziert oder vermieden wird;
• eine Bewegung des Arbeitsgeräts (1) gestoppt oder umgekehrt wird; und/oder
• eine Bewegung des Arbeitsgeräts (1) außerhalb eines Bearbeitungsabschnitts (BA) des Arbeitsbereichs (A) erfolgt, welcher dem ermittelten Beeinträchtigungszustand zugeordnet ist.

3. Arbeitsgerät (1) nach Anspruch 1 oder 2,
wobei der ermittelte Beeinträchtigungszustand zumindest einen von folgenden erfassten und/oder berechneten Kommunikationsparametern umfasst, welcher der Kommunikationsverbindung (NS1, NS2, NS3, NS4) und/oder dem Funknavigationssystem (2) zugeordnet ist:
• eine Anzahl verfügbarer und/oder verbundener Navigationssatelliten (21, 22, 23, 24), insbesondere zu einem definierten Zeitpunkt und/oder für eine definierte Zeitdauer;
• eine Intensität, insbesondere eine Feldstärke, zumindest eines Navigationssignals (NS1, NS2, NS3, NS4);
• zumindest eine Positionsgenauigkeit in zumindest einer Richtung (x, y, h);
• eine Qualität zumindest eines Navigationssignals (NS1, NS2, NS3, NS4) hinsichtlich zumindest einer Störung, welche das zumindest eine Navigationssignal (NS1, NS2, NS3, NS4) zumindest überlagert; und/oder
wobei der ermittelte Beeinträchtigungszustand eine Unterbrechung der Kommunikationsverbindung (NS1, NS2, NS3, NS4) umfasst.

4. Arbeitsgerät (1) nach einem der vorhergehenden Ansprüche,
wobei die geänderte Bearbeitungsstrategieinformation den definierten Bearbeitungspfad (BP) derart festlegt, dass der definierte Bearbeitungspfad (BP) zumindest abschnittsweise zumindest einen von folgenden Verläufen umfasst:
• senkrecht zu zumindest einer Höhenlinie (HL1, HL2, HL3) einer Steigung (ST) des Bodens (B) unter Berücksichtigung zumindest eines Steigungswinkels (α) der Steigung (ST);
• senkrecht zu einer Tangentiallinie (TL) des Rands (R);
• schräg zu einer Tangentiallinie (TL) des Rands (R) unter einem Anstellwinkel (β), welcher insbesondere gleich oder größer als 45 Grad ist;
• in entgegengesetzter Richtung;
• krümmungsfrei.

5. Arbeitsgerät (1) nach einem der vorhergehenden Ansprüche,
wobei die Kontrolleinrichtung (300) konfiguriert ist, zur Erzeugung der geänderten Bearbeitungsstrategieinformation den ermittelten Beeinträchtigungszustand auszuwerten und die Bearbeitungsstrategieinformation unter Berücksichtigung des ausgewerteten Beeinträchtigungszustands anzupassen; und/oder
wobei die Kontrolleinrichtung (300) konfiguriert ist, den ermittelten Beeinträchtigungszustand zusammen mit der Bearbeitungsstrategieinformation mittels der Kommunikationseinrichtung (600) an zumindest eine von folgenden separaten Vorrichtungen (BS, E, SE) drahtlos zu übertragen, um den ermittelten Beeinträchtigungszustand auszuwerten und die geänderte Bearbeitungsstrategieinformation unter Berücksichtigung des ausgewerteten Beeinträchtigungszustands zu empfangen:
• eine Basisstation (BS) zum Betrieb des Arbeitsgeräts (1);
• ein Endgerät (E), insbesondere ein mobiles Endgerät (E), zum Betrieb des Arbeitsgeräts (1);
• ein Server (SE) zum Betrieb des Arbeitsgeräts (1).

6. Arbeitsgerät (1) nach einem der vorhergehenden Ansprüche,
wobei die Kontrolleinrichtung (300) konfiguriert ist, mittels einer Traktionssensoreinrichtung (400) des Arbeitsgeräts (1) einen Traktionsverlust (TV) zwischen dem Arbeitsgerät (1) und dem Boden (B) in Abhängigkeit zumindest eines Ermittlungsparameters in zumindest einer von folgenden Richtungen zu ermitteln: parallel zu der Bewegungsrichtung (BR), quer zu der Bewegungsrichtung (BR); und
wobei die Kontrolleinrichtung (300) konfiguriert ist, die Antriebseinrichtung (100) und/oder die Fahrwerkeinrichtung (200) unter Berücksichtigung des ermittelten Traktionsverlusts (TV) einzustellen, um zumindest einen weiteren Traktionsverlust (TV) entlang des Bearbeitungspfads (BP) definiert zu reduzieren oder zu vermeiden.

7. Arbeitsgerät (1) nach Anspruch 6,
wobei zur Ermittlung des zumindest einen Traktionsverlusts (TV) durch eine Sensorfusion die Traktionssensoreinrichtung (400) zumindest zwei von folgenden Sensorelementen (410, 420, 430, 440, 450) umfasst:
• einen Drehzahlsensor (410) zur Erfassung einer Drehzahl des zumindest einen Antriebselements (210);
• einen Gyroskopsensor (420) zur Erfassung einer Orientierung, insbesondere einer Neigung, des Arbeitsgeräts (1) in zumindest einer Richtung (x, y, h);
• einen Beschleunigungssensor (430) zur Erfassung einer Beschleunigung des Arbeitsgeräts (1) in zumindest einer Richtung (x, y, h);
• einen Gewichtssensor (440) zur Erfassung zumindest eines Gewichtskraftanteils einer Gewichtskraft des Arbeitsgeräts (1) auf das zumindest eine Antriebselement (210);
• einen Kraftsensor (450) zur Erfassung einer Abstützkraft zur Abstützung einer Werkzeugkraft einer Werkzeugeinrichtung (500) des Arbeitsgeräts (1) zur Bearbeitung des Bodens (B).

8. Arbeitsgerät (1) nach Anspruch 6 oder 7,
wobei die Kontrolleinrichtung (300) zur Ermittlung einer Leistung zumindest einer von folgenden Einrichtungen (100, 200, 500) des Arbeitsgeräts (1) konfiguriert ist:
• die Antriebseinrichtung (100);
• die Fahrwerkeinrichtung (200);
• eine Werkzeugeinrichtung (500) des Arbeitsgeräts (1) zur Bearbeitung des Bodens (B);
wobei die Kontrolleinrichtung (300) konfiguriert ist, den ermittelten Traktionsverlust (TV) mit der ermittelten Leistung unter Berücksichtigung von zumindest einem Verifikationsparameter zu verifizieren, und bei einer Abweichung die Antriebseinrichtung (100) und/oder die Fahrwerkeinrichtung (200) definiert einzustellen und den zumindest Traktionsverlust (TV) zumindest einmal wiederholt zu ermitteln.

9. Arbeitsgerät (1) nach einem der vorhergehenden Ansprüche,
wobei die Kontrolleinrichtung (300) konfiguriert ist, den ermittelten Beeinträchtigungszustand einer Position (P1, P2) des Arbeitsgeräts (1) und/oder einer Lage eines Bearbeitungsabschnitts (BA) des Arbeitsbereichs (A) zuzuordnen, und
wobei die Kontrolleinrichtung (300) konfiguriert ist, zur Erzeugung der geänderten Bearbeitungsstrategieinformation die zugeordnete Position (P1, P2) und/oder die zugeordnete Lage des Bearbeitungsabschnitts (BA) auszuwerten und die Bearbeitungsstrategieinformation unter Berücksichtigung der ausgewerteten Position (P1, P2) und/oder der ausgewerteten Lage des Bearbeitungsabschnitts (BA) anzupassen.

10. Verfahren zum Betrieb eines mobilen Arbeitsgeräts (1) zur teilautonomen und/oder autonomen Bearbeitung eines Bodens (B) eines Arbeitsbereichs (A) entlang eines Bearbeitungspfads (BP), wobei der Arbeitsbereich (A) durch einen Rand (R) drahtlos definiert ist,
wobei das Arbeitsgerät (1) eine Antriebseinrichtung (100) zur Erzeugung einer Antriebskraft (F_A) zum Antrieb des Arbeitsgeräts (1); eine Fahrwerkeinrichtung (200) mit zumindest einem Antriebselement (210) zur Übertragung der Antriebskraft (F_A) auf den Boden (B); eine Kontrolleinrichtung (300) zur Einstellung, insbesondere Steuerung und/oder Regelung, der Antriebseinrichtung (100) und/oder der Fahrwerkeinrichtung (200) in Abhängigkeit einer Bearbeitungsstrategieinformation; und eine Kommunikationseinrichtung (600) zur Ausbildung einer Kommunikationsverbindung (NS1, NS2, NS3, NS4) mit einem Funknavigationssystem (2) umfasst;
mit den Verfahrensschritten:
a) Erzeugen einer Antriebskraft (F_A);
b) Übertragen der erzeugten Antriebskraft (F_A) auf den Boden (B) durch das zumindest eine Antriebselement (210) und Bewegen des Arbeitsgeräts (1) in einer Bewegungsrichtung (BR);
c) Ausbilden einer Kommunikationsverbindung (NS1, NS2, NS3, NS4) mit einem Funknavigationssystem (2) und Bestimmen einer Position (P1, P2) des Arbeitsgeräts (1);
d) Ermitteln eines Beeinträchtigungszustands der Kommunikationsverbindung (NS1, NS2, NS3, NS4);
e) Ändern der Bearbeitungsstrategieinformation unter Berücksichtigung des ermittelten Beeinträchtigungszustands;
f) Einstellen der Antriebseinrichtung (100) und/oder der Fahrwerkeinrichtung (200) in Abhängigkeit der geänderten Bearbeitungsstrategieinformation, welche einen definierten Bearbeitungspfad (BP) festlegt, um zumindest ein Überfahren des Arbeitsgeräts (1) über den Rand (R) zu vermeiden;
wobei insbesondere das Verfahren zur Ausführung mit einem Arbeitsgerät (1) nach einem der vorhergehenden Ansprüche konfiguriert ist.

11. System, umfassend:
• ein Arbeitsgerät (1), welches nach einem der vorhergehenden Ansprüche 1 bis 9 konfiguriert ist;
• zumindest eine von folgenden separaten Vorrichtungen (BS, E, SE), welche jeweils zur Ausbildung einer drahtlosen Kommunikationsverbindung (KS) mit der Kommunikationseinrichtung (600) des Arbeitsgeräts (1) konfiguriert ist:
• eine Basisstation (BS) zum Betrieb des Arbeitsgeräts (1);
• ein Endgerät (E), insbesondere ein mobiles Endgerät (E), zum Betrieb des Arbeitsgeräts (1);
• ein Server (SE) zum Betrieb des Arbeitsgeräts (1);
wobei die Basisstation (BS), das Endgerät (E) und/oder der Server (SE) jeweils zur Erzeugung einer geänderten Bearbeitungsstrategieinformation konfiguriert sind,
wobei insbesondere das System zur Ausführung eines Verfahrens gemäß Anspruch 10 konfiguriert ist.
